Europäisches Patentamt

European Patent Office

Office européen des brevets

(11) Publication number:

**0 298 938**
**A1**

## (12) EUROPEAN PATENT APPLICATION

(21) Application number: 88850216.8

(22) Date of filing: 17.06.88

(51) Int. Cl.⁴: **B 65 G 27/04**

(30) Priority: 07.07.87 SE 8702789

(43) Date of publication of application:
**11.01.89 Bulletin 89/02**

(84) Designated Contracting States:
**BE CH DE ES FR GB IT LI NL SE**

(71) Applicant: **ECOMAT INDUSTRI AB**
**Box 73**
**S-56 401 BANKERYD (SE)**

(72) Inventor: **Löfgren, Bengt**
**Lärkgatan 27**
**S-56401 Bankeryd (SE)**

(74) Representative: **Lindblad, Sture**
**FAMTEC Box 7574**
**S-103 93 Stockholm (SE)**

(54) Vibrator table.

(57) A vibrating shaking table (5) for a machine for feeding and for arranging or sorting components or parts which are contained in an unordered fashion in a container (1), in which the parts are discharged in a particular intended position.

The shaking table (5) is executed in a single, monolithic piece, or is constructed from pieces of a material with internal damping, for example a plastic material such as glass fibre-reinforced epoxy plastic, which pieces are permanently connected to one another by glueing, melting or a similar process.

The shaking table (5) damps out all oscillations, is very durable, and provides quiet, yet rapid operation.

Fig. 1

EP 0 298 938 A1

## Description

### SHAKING TABLE

The present invention relates to a shaking table for a machine for feeding and arranging components from a container, in which the components are held in an unordered fashion, to an outlet, where the components lie arranged in a particular, desired position.

Previously disclosed are machines of a kind in which the arrangement and feeding take place on a shaking table which is caused to vibrate by an electric or pneumatic vibrator, which causes the shaking table to oscillate at an amplitude and frequency such that the components are fed forwards in a certain direction towards a selection arrangement, through which those components which are correctly arranged can pass, whereas those components which are not facing in the correct direction are returned to the component input conveyor on which the components which are being fed from the container are introduced onto the shaking table. In order to ensure and encourage the movement of the components on the shaking table, this can be covered with a piece of fabric material or a brush inclined in relation to the normal to the surface of the table in the direction in which the components are to be fed.

The feed tables in previously disclosed machines often consist of plates which are attached to a supporting table of frame by means of bolts and nuts for the purpose of holding the vibrating shaking table together. A shaking table assembled in this way suffers from a number of disadvantages which have an adverse effect on the function of the table during feeding and arranging operations. On the one hand the screwed connections are able to work loose easily, so that the components are separated from one another, and on the other hand oscillations at different natural frequencies can arise in the walls or in the base of the feed table, which can similarly upset the even feeding and sorting of the components.

The fact that the feed tables are made from metal plates, usually of iron or steel, means that there is no inherent damping which can reduce the amplitudes of the oscillations.

These disadvantages can be avoided in accordance with the invention, and a compact and durable table with damping oscillation movements is obtained from the execution of the table as a single piece or from pieces which are permanently connected to one another, for example by glueing, in conjunction with which the table is executed in a plastic material with internal damping, for example glass fibre-reinforced epoxy plastic.

The invention is described below in greater detail in conjunction with the accompanying drawings, in which:

Fig. 1 illustrates schematically an arrangement and feeding machine; and

Fig. 2 illustrates a shaking table in accordance with the invention.

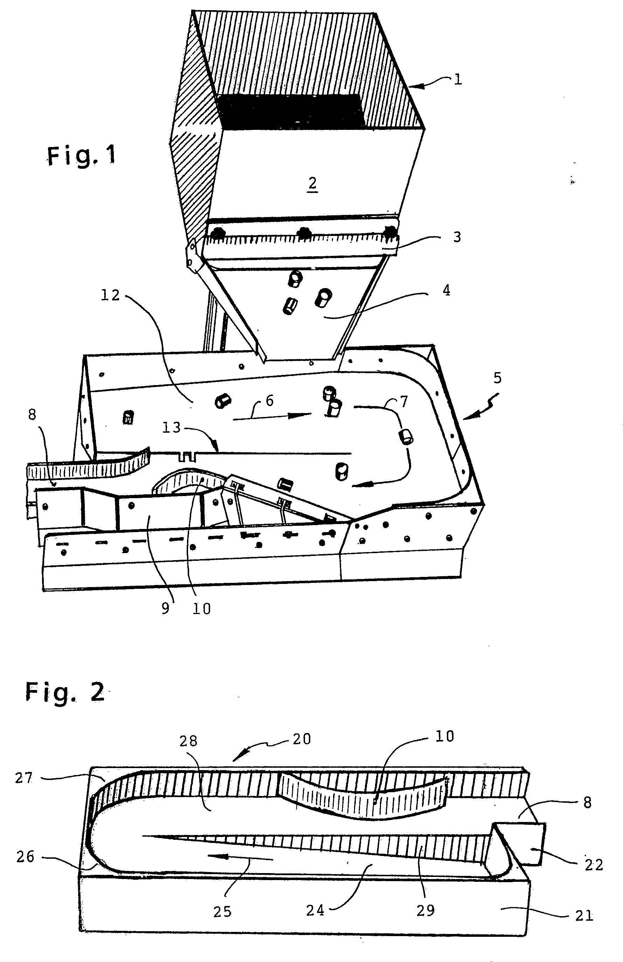

The designation 1 is used in Fig. 1 in respect of a container in which are held components which are to be fed in a particular position. There is present on the front wall 2 of the container a rubber sheet 3, under which the components can be shaken out into a channel 4 and down onto a shaking table 5. The components are then fed by vibrations to the right, as shown by the arrow 6, and then around the ends of the table, as shown by the arrow 7, towards an outlet 8. There is present on the way towards the outlet a guide rail 10 projecting from the wall 9 of the feed table, which guide rail must be passed by the components on their way towards the outlet. Those components which, because of the direction in which they are facing, are unable to pass the guide rail 10, drop down onto the input conveyor 12 of the shaking table over a straight or oblique edge 13. Those components which have been rejected by sorting then combine with the components emerging from the channel 4 and are fed forwards once more towards the rail 10. Those components which are facing the right way pass out through the discharge channel 8.

Fig. 2 illustrates a shaking channel on a rather larger scale, viewed from the opposite direction in relation to the shaking channel in Fig. 1. The channel 20, shown in the Figure as an example of the invention, consists of two components 21 and 22, which are executed from reinforced plastic with internal damping. The designation 21 is used in respect of the input part of the channel, where the components from the previously described container 1 are fed in. The bottom 24 of the input part is inclined slightly upwards in the direction of feed 25 and is terminated by a rounded edge wall 26, which is connected to a rounded edge wall 27 on the horizontal part of the discharge table, along which the components are fed. Arranged on this part 28 is the guide rail 10 which separates components which are facing in the right way from those which are not. The latter are pushed outside the wedge-shaped wall 26 between the parts 25 and 28 of the shaking table, so that they drop down the wedge-shaped wall 26 and are introduced amongst the components which have been fed onto the table 24.

The fact that the shaking table consists of a single monolithic structure made of a damping material means that the components will move very gently in the direction indicated by the arrows, since there are no nodal points or internodes along the feed path thanks to the excellent damping characteristics of the material. Nor is there any need to fear that the different parts of the shaking table will be separated from one another due to the working loose of fasteners in the form of bolts and nuts or similar.

It is obvious that a shaking table can be executed as a single piece, instead of being glued together from two parts as shown in the example. The shaking table can also consist of a number of parts greater than two, which are glued together. This is a production question, and the number of parts and their shape must be adapted in accordance with the simplicity or complexity exhibited by the form of the shaking table.

A person skilled in the art can also envisage embodiments of the invention other than that illustrated by way of example, without departing from the invention as set out in the Patent Claims.

**Claims**

1. Shaking table for a machine for feeding and arranging components arriving from a container, in which the parts are held in an unordered fashion, to an outlet, where the parts are discharged in a particular intended position, **characterized** in that the table is executed as a single, monolithic whole, or is constructed from pieces of a material with internal damping, for example a plastic material such as glass fibre-reinforced epoxy plastic, which pieces are permanently connected to cne another by glueing, melting or a similar process.

2. Shaking table in accordance with Patent Claim 1, **characterized** in that the shaking table comprises, on the one hand, an upward-inclined feed part and, on the other hand, an essentially horizontal discharge part, in conjunction with which each of said parts is executed in its own section of the assembled shaking table.

3. Shaking table in accordance with Patent Claim 1, **characterized** by walls projecting downwards at the edges of the table, which walls are connected to the outer walls of the shaking table in such a way as to form a monolithic whole, for the purpose of preventing contact with the vibration arrangement supporting the shaking table.

Fig.1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 134 502 (D.McELROY)<br>* The whole document, expecially figure 4; page 2, lignes 21-43 * | 1-3 | B 65 G 27/04 |
| A | US-A-3 841 471 (D.E.MEAD)<br>* Figures 1-8; column 1, line 50 - column 5, line 15 * | 1-3 | |

TECHNICAL FIELDS SEARCHED (Int. Cl.4)

B 65 G

The present search report has been drawn up for all claims

| Place of search | Date of completion of the search | Examiner |
|---|---|---|
| THE HAGUE | 11-10-1988 | WERNER D.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)